# EUROPEAN PATENT APPLICATION

(11) **EP 3 637 783 A1**
(43) Date of publication of application: **15.04.2020**
(21) Application number: 18813066.0
(22) Date of filing: 18.05.2018
(51) Int. Cl.: H04N 21/218

(54) **METHOD AND APPARATUS FOR PROCESSING VIDEO RESOURCE**

(30) Priority: 05.06.2017 CN 201710415356
(71) Applicant: Shanghai Jiaotong University, Shanghai 200240 (CN); ZTE Corporation, Shenzhen, Guangdong 518057 (CN)
(72) Inventor: XU, Yiling, Shanghai 200240 (CN); WANG, Yanfeng, Shanghai 200240 (CN); ZHANG, Wenjun, Shanghai 200240 (CN); LI, Yunqiao, Shanghai 200240 (CN); MA, Zhan, Nanjing Jiangsu 210023 (CN); WU, Zhao, Shenzhen Guangdong 518057 (CN); LI, Ming, Shenzhen Guangdong 518057 (CN); WU, Ping, Shenzhen Guangdong 518057 (CN)
(74) Representative: Iannone, Carlo Luigi
(86) International application number: PCT/CN2018/087445
(87) International publication number: WO 2018/223833

(57) **Abstract**

Provided are a method and an apparatus for processing a video resource. The method for processing a video resource includes: identifying the video type of the video resource to obtain the description information of the video resource, where the description information includes at least one of the following corresponding to the video resource: a video projection type, a video rearrangement mode, and a video partitioning mode; and sending the description information to the receiving end of the video resource.

## Description

### TECHNICAL FIELD

The present invention relates to the field of communications, for example, a method and apparatus for processing a video resource.

### BACKGROUND

With the rapid development of digital media technology, the video service presentation increases explosively, and particularly, the wide application of 360-degree panoramic video and ultrahigh-resolution video services (such as 4K, 8K and the like) remarkably increases the video data required for presentation. Therefore, brand new video content types and video presentation characteristics are brought, and higher requirements are also provided for the caching and presentation capabilities of a client terminal while heavy burden is caused on the network.

For common videos, in the related art, making video contents with different resolution levels and identifying the video resources of each resolution level are proposed. A user requests to acquire the resolution description information of each of the video resources with a resolution level before acquiring the video resources. According to different network bandwidth conditions and presentation capabilities of terminals, the video resource of a proper resolution level is selected, and the corresponding video resource is selectively received or actively acquired.

However, with the wide application of 360-degree panoramic video and ultra-high resolution video services, the huge data volume which is several times of that of common video makes panoramic video and ultra-high resolution video face huge challenges in transmission and consumption, thereby generating brand new video content types (such as, in panoramic video, non-uniform panoramic video content types including a primary field of view, and in ultra-high resolution video, ultra-high resolution video content types including different quality partitioned videos) different from the common video; on the other hand, a special projection and inverse projection process is needed for the 360-degree three-dimensional picture of the panoramic video in video transmission and consumption, and the unique projection process of the panoramic video brings brand-new video content attributes and an optional video preprocessing process. Therefore, the mode that the existing signaling messages only identify the resolution information or individual attributes of the common video are not sufficient to completely describe and accurately and unambiguously position the available video resources of the panoramic video and the ultra-high resolution video including the brand-new video content types and the related video attributes. Under the condition that the available resources include panoramic videos or ultrahigh-resolution videos with different video production and processing methods, and that only resolution description or individual attribute description of each video resource is requested and selected, a plurality of video resources is fuzzily positioned. For example, in the case where the available video resources include a high-quality panoramic video, a low-quality panoramic video, a non-uniform panoramic video including a high-quality primary field of view, and a panoramic video including a standard definition primary field of view, and a terminal device without the capability of rendering and presenting the non-uniform panoramic video selects a high-quality level through only resolution level description information, the high-quality panoramic video and the non-uniform panoramic video including the high-quality primary field of view are positioned to be selectively received or actively acquired. However, the non-uniform panoramic video including the high-quality primary field of view cannot be consumed by the terminal device, thereby such inaccurate positioning of the video resources will cause unnecessary video data transmission or storage.

### SUMMARY

The following is a summary of the subject matter described herein in detail. This summary is not intended to limit the scope of the claims.

Embodiments of the present invention provide a method and an apparatus for processing a video resource. The phenomenon in which a video resource cannot be accurately positioned and identified in the related art is avoided.

One embodiment of the present invention provides a method for processing a video resource, including: identifying the video type of the video resource to obtain the description information of the video resource. The description information includes at least one of the following corresponding to the video resource: a video projection type, a video rearrangement mode and a video partitioning mode. The description information is sent to a receiving end of the video resource.

One embodiment of the present invention provides another method for processing a video resource, including: receiving description information of a video resource. The description information is used for indicating the video type of the video resource. The description information includes at least one of a video projection type, a video rearrangement mode and a video partitioning mode corresponding to the video resource. The video resource is processed according to the description information.

One embodiment of the present invention provides a processing apparatus of a video resource, including: a processing module configured to identify the video type of the video resource to obtain the description information of the video resource. The description information includes at least one of the following corresponding to the video resource: a video projection type, a video rearrangement mode and a video partitioning mode. A sending module is configured to send the description information to a receiving end of the video resource. Another embodiment of the present invention provides another apparatus for processing a video resource, including: a receiving module configured to receive description information of a video resource. The description information is used for indicating a video type of the video resource. The description information includes at least one of the following corresponding to the video resource: a video projection type, a video rearrangement mode and a video partitioning mode. The processing module is configured to process the video resource according to the description information. One embodiment of the present invention provides a computer-readable storage medium. The computer-readable storage medium is configured to store one or more programs which may be executed by one or more processors for performing the above-mentioned method for performing service offloading.

One embodiment of the present invention also provides a processor for executing one or more programs to perform the above-mentioned method for processing a video resource.

One embodiment of the present invention provides a method for processing a video resource, including: identifying the video type of the video resource to obtain the description information of the video resource. The description information includes at least one of the following corresponding to the video resource: a video projection type, a video rearrangement mode and a video partitioning mode. The description information is sent to a receiving end of the video resource. The video type of the video resource is identified so that each video resource and each processing method can be accurately positioned. In this way, the phenomenon in which a video resource cannot be accurately positioned and identified in the related art is avoided.

Other aspects can be understood after the drawings and the detailed description are read and understood.

### BRIEF DESCRIPTION OF DRAWINGS

The accompanying drawings described herein are used to provide a further understanding of the present invention, and form a part of the present application. The illustrative embodiments and descriptions thereof in the present invention are used to illustrate the present invention and are not intended to limit the present invention in an improper way.

In the drawings:
FIG. 1 is a block diagram of a hardware structure of a mobile terminal capable of executing a method for processing a video resource according to one embodiment of the present invention;
FIG. 2 is a flowchart of a method for processing a video resource according to one embodiment of the present invention;
FIG. 3 is a flowchart of another method for processing a video resource according to one embodiment of the present invention;
FIG. 4 is a block diagram of an apparatus for processing a video resource according to one embodiment of the present invention; FIG. 5 is a block diagram of another apparatus for processing a video resource according to one embodiment of the present invention;
FIG. 6 is an example diagram illustrating a structure of identification information in one embodiment of the present invention;
FIG. 7 is an example diagram illustrating identification in interactive panoramic video consumption in one embodiment of the present invention;
FIG. 8 is an example diagram illustrating identification in interactive panoramic video consumption in another embodiment of the present invention; and
FIG. 9 is a schematic diagram illustrating an application example of interactive panoramic video consumption in one embodiment of the present invention.

### DETAILED DESCRIPTION

Hereinafter the present invention will be described in detail with reference to the drawings and in conjunction with embodiments.

It is to be noted that the terms "first", "second" and the like in the description, claims and drawings of the present invention are used to distinguish between similar objects and are not necessarily used to describe a specific order or sequence.

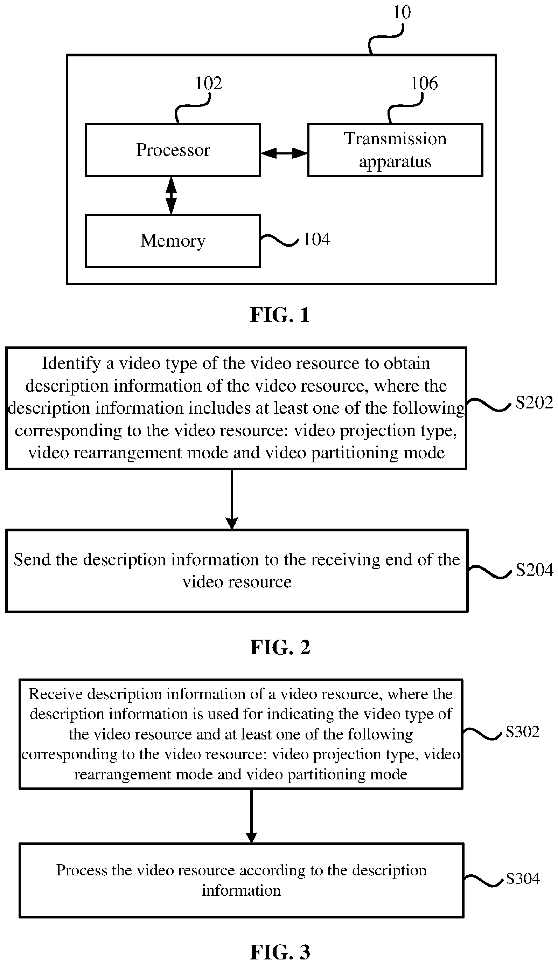

A method embodiment provided by one embodiment of the present application may be executed in a mobile terminal, a computer terminal or other similar computing apparatuses. A mobile terminal is used as an example. FIG. 1 is a block diagram of a hardware structure of a mobile terminal capable of executing a method for processing a video resource according to one embodiment of the present invention. As shown in FIG. 1, a terminal 10 may include one or more (only one is shown in FIG. 1) processors 102 (the processor 102 may include, but is not limited to, a microprocessor MCU or a programmable logic device FPGA), a memory 104 configured to store data, and a transmission apparatus 106 configured to perform a communication function. The structure shown in FIG. 1 is merely illustrative and not intended to limit the structure of the electronic device described above. For example, the mobile terminal 10 may further include more or fewer components than the components shown in FIG. 1 or may have a configuration different from that shown in FIG. 1.

The memory 104 may be used for storing software programs and modules of application software, such as program instructions/modules corresponding to the video resources processing method in embodiments of the present invention. The processor 102 executes the software programs and modules stored in the memory 104 so as to perform various function applications and data processing, that is, to perform the method described above. The memory 104 may include a high-speed random access memory, and may further include a nonvolatile memory, such as one or more magnetic storage apparatuses, flash memories or other nonvolatile solid-state memories. In some embodiments, the memory 104 may further include memories which are remotely disposed with respect to the processor 102. These remote memories may be connected to the mobile terminal 10 via a network. Examples of the above network include, but are not limited to, the Internet, an intranet, a local area network, a mobile communication network and a combination thereof.

The transmission apparatus 106 is configured to receive or send data via a network. Specific examples of such a network may include a radio network provided by a communication provider of the mobile terminal 10. In one embodiment, the transmission apparatus 106 includes a network interface controller, NIC, which may be connected to other network equipment via a base station and thus be capable of communicating with the Internet. In one example, the transmission apparatus 106 may be a radio frequency, RF, module, which is configured to communicate with the Internet in a wireless way.

In one embodiment, a method for processing a video resource is provided. FIG. 2 is a flowchart of a method for processing a video resource according to the embodiment of the present invention. As shown in FIG. 2, the method includes step S202 and step S204.

In step S202, a video type of the video resource is identified so that description information of the video resource is obtained. The description information includes at least one of the following corresponding to the video resource: a video projection type, a video rearrangement mode and a video partitioning mode.

In step S204, the description information is sent to the receiving end of the video resource.

Through the above-mentioned steps, a video type of the video resource is identified so that description information of the video resource is obtained, where the description information includes at least one of the following corresponding to the video resource: video projection type, video rearrangement mode and video partitioning mode; and the description information is sent to the receiving end of the video resource. The video type of the video resource is identified, and each video resource and each processing method can be accurately positioned. The phenomenon in which the video resource cannot be accurately positioned and identified in the related art is avoided.

The subject of the above-mentioned steps may be a generation device of a video resource or a distribution device of a video resource, such as a server, but is not limited thereto.

In one embodiment, after the description information is sent to the receiving end of the video resource, the method further includes: sending the video resource to the receiving end; or in response to determining that the video resource comprises a plurality of video resources, receiving a request message sent by the receiving end of the video resource, screening the video resources according to the request message, and sending the screened-out video resource to the receiving end.

FIG. 3 is a flowchart of another method for processing a video resource according to one embodiment of the present invention. As shown in FIG. 3, the method includes steps S302 and S304.

In step S302, description information of the video resource is received. The description information is used for indicating the video type of the video resource. The description information includes at least one of the following corresponding to the video resource: a video projection type, a video rearrangement mode, and a video partitioning mode.

In step S304, the video resource is processed according to the description information.

In one embodiment, the subject of the above-mentioned steps may be a receiving device of a video resource, a distribution device of a video resource, or a presentation device of a video resource, such as a mobile phone, a television, and so on, but is not limited thereto.

In one embodiment, after the description information of the video resource is received, the method further includes that the video resource is requested according to the description information and at least one of the network quality of the receiving end and the capability information of the receiving end.

In one embodiment, processing the video resource according to the description information includes: receiving the video resource; or receiving part of the video resource; or rejecting receiving the video resource.

In one embodiment, the video type includes: a projection type, a video content type, video quality, and video region information.

In one embodiment, the video quality includes at least one of a resolution, a code rate, a frame rate, and a quality level. The quality level may include different combinations of values of a plurality of parameters of resolution, code rate, and frame rate. For example, a medium quality level may be set as follows: the resolution is 720 P, the code rate is 1.25 Mbps, and the frame rate is arbitrary. In another embodiment, the resolution may further include: a resolution-designated video, a 360-degree panoramic video and an ultrahigh-resolution video. The resolution-designated video is a video with a resolution lower than 4K, and may include a plurality of levels, such as 320P, 480P, 720P and the like. The ultrahigh-resolution video is a video with a resolution greater than or equal to 4K, and may include a plurality of levels, such as 4K, 8K and the like.

In one embodiment, the projection type includes at least one of equirectangular projection, cube map projection, octahedral projection, icosahedral projection, and unmapped projection.

In one embodiment, the video content type includes at least one of a non-region-divided video, a rearranged video, and a partitioned video.

In one embodiment, the description types of the rearranged video include a rectangular rearrangement and a polygon rearrangement.

In one embodiment, the partitioned video includes at least one of a number of partitions, a region position of each of the partitions, or video quality of each of the partitions.

In one embodiment, the description type of the video region information includes at least one of a coordinate of a center point of a region, a width of the region, and a height of the region. For example, the coordinate system in which the coordinates are located includes a two-dimensional spacial coordinate system and a three-dimensional spacial coordinate system. In a two-dimensional spacial coordinate system, the value of the coordinate includes at least one of a two-dimensional rectangular coordinate system value and a two-dimensional spherical coordinate system value. In the three-dimensional spacial coordinate system, the coordinate value includes at least one of a three-dimensional spatial rectangular coordinate system value and a three-dimensional spherical coordinate system value.

From the above description, it will be apparent to those skilled in the art that the method of any embodiment described above may be performed by means of software plus a necessary general-purpose hardware platform, or may of course be performed by hardware. The technical solutions provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the methods according to each embodiment of the present invention.

The embodiments of the present invention further provide an apparatus for processing a video resource. The apparatus is used for performing the embodiments described above and preferred embodiments. What has been described will not be repeated. As used below, the term "module" may be software, hardware or a combination thereof capable of performing predetermined functions. The apparatus described below in the embodiments is performed by software, but implementation by hardware or by a combination of software and hardware is also possible and conceived.

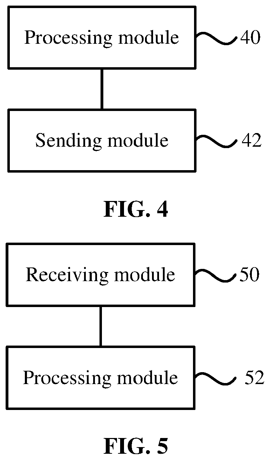

FIG. 4 is a block diagram of an apparatus for processing a video resource according to one embodiment of the present invention. As shown in FIG. 4, the apparatus includes a processing module 40 and a sending module 42.

The processing module 40 is configured to identify a video type of the video resource to obtain description information of the video resource. The description information includes at least one of the following corresponding to the video resource: video projection type, a video rearrangement mode, and a video partitioning mode.

The sending module 42 is configured to send the description information to a receiving end of the video resource.

FIG. 5 is a block diagram of an apparatus for processing a video resource according to one embodiment of the present invention. As shown in FIG. 5, the apparatus includes a receiving module 50 and a processing module 52.

The receiving module 50 is configured to receive description information of the video resource. The description information is used for indicating the video type of the video resource. The description information includes at least one of the following corresponding to the video resource: a video projection type, a video rearrangement mode, and a video partitioning mode.

The processing module 52 is configured to process the video resource according to the description information.

It is to be noted that the various modules described above may be performed by software or hardware. Implementation by hardware may be performed in the following manners: the various modules described above are located in a same processor, or the various modules described above are located in their respective processors in any combination form.

One embodiment of the present application will be explained and illustrated in detail with reference to specific scenarios and examples.

For the case in the related art, it is needed to increase attribute information in the description of available resources according to diversification of types of video contents. However, for the evolving video production and processing methods, the action of simply adding new video attribute information to the description information of the available video resource will cause the structural disorder and information duplication of the description information. Therefore, it is needed to provide a structural manner of description that can be compatible with emerging new attributes in a flexible, efficient, and logical way. The description information needs to cover available video resources of all the possible video content types and needs to be capable of distinguishing between all video resources so that the specific video resource in the available video resources can be accurately positioned through the description information.

This embodiment the present invention provides, in the signaling message, a method for describing an available video resource based on the video content attribute, avoiding the phenomenon in which the existing signaling message cannot cover all video content types and cannot distinguish and accurately position different types of video contents.

This embodiment provides, in a signaling message, a method for describing an available video resource based on the video content attribute. The method includes the steps described below.

In the description information of an available video resource, different video content types, preprocessing methods of different types of video contents, and corresponding attributes of a common video, a 360-degree panoramic video and an ultrahigh-resolution video are identified. After acquiring the description information of the available video resource provided the present invention herein, the client screens out one or more projection types (such as an ultrahigh-resolution video with no projection or a panoramic video with equirectangular projection or a panoramic video with cube map projection) according to the presentation strategy and the presentation capability of the terminal device and network condition, and screens out one or more video content types (such as the content type of a partitioned panoramic video of a panoramic video with equirectangular projection, and the content type of a non-uniform panoramic video including a primary field of view) from different video content types included in each of the determined one or more projection types. In another embodiment of the present invention, it is possible to screen out one video content preprocessing method (for example, truncated-pyramid rearrangement of a non-uniform video including a primary field of view) from the video content preprocessing methods included in each of the determined one or more video content types, and finally screen out one or more media resource identifiers used for indexing video resources from specific attributes (for example, quality information and position information) of each video resource included in each specific video content preprocessing method of the one or more determined video content types. The client selectively receives or actively requests one or more video resources indexed by the screened-out media resource identifiers.

In this embodiment, identification information of different video content types, preprocessing methods of different types of video contents, and corresponding attributes of common videos, 360-degree panoramic videos and ultrahigh-resolution videos, which needs to be added to the description information of available video resources, may be diversified. For example, the identification information may be multiple sets of the following information (equivalent to the description information in the above-mentioned embodiment) described below.

Information one: indicates the projection types (including no projection) included in an available video resource.

Information two: indicates the video content types included in an available video resource with a specific projection type or with no projection on the basis of information one.

Information three: indicates the number of primary views of field of a video resource based on a specific video content type on the basis of information two.

Information four: indicates the region division and rearrangement mode of a video resource on the basis of information two or information three.

Information five: indicates the corresponding region information of a video resource during presentation on the basis of information two or information four.

Information six: indicates the quality level information of part or all of the contents of a video resource on the basis of information two or information five.

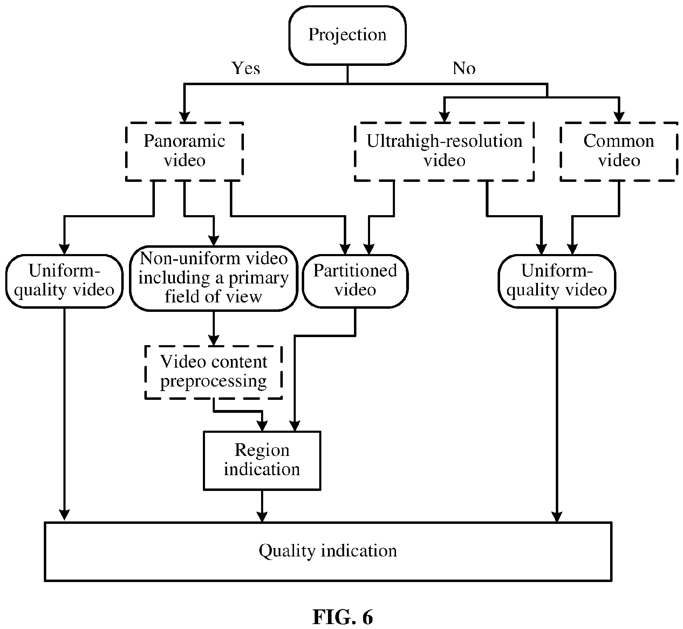

For a better understanding of the above information, reference may be made to the structure diagram of FIG. 6. FIG. 6 is an example diagram illustrating a structure of identification information in one embodiment of the present invention.

With the rapid development of video media technology, video can be consumed on more and more diverse terminals. However, the heterogeneous hardware capability of terminal equipment and the complexity of the network condition provide personalized requirements for the data type and transmission mechanism of video data. In order to support the requirement of personalized consumption of video media in different network conditions and terminal devices, embodiments of the present invention provides a description method for available video resources. The method screens description information of the available video resources according to the requirement of a user in an application scene selectively received or actively acquired by the user, and indexes corresponding video resources. Through the description method, the description information is ensured to cover all the available video resources, and the corresponding video resources can be distinguished and accurately indexed.

In view of the above, new indication information needs to be added to the signaling information in the video transmission process, and the information can be diversified. As a specific implementation manner, the following information may be used as examples.
number_of_projection_type: indicates the number of projection types included in an available video resource.
projection_type: indicates the projection type of a video resource, including the case of no projection.
number_of_content_type: indicates the number of video content types included in a video resource with a specific projection type or with no projection.
content_type: indicates the video content type of a video resource.
number_of_asset: indicates the number of video resources of a specific video content type.
number_of_region: indicates the number of regions divided and rearranged for a specific video resource region.
number_of_primary_region: indicates the number of primary-field-of-view regions included in a specific video resource.
packing_type: indicates the rearrangement mode of specific regions of a specific video resource.
region_packing: describes the rearrangement information of specific regions of a specific video resource.
region_descriptor: describes the spatial region information of a specific video resource.
quality_level: indicates the quality level of video content.

In the following embodiment, for convenience of description, the description below is given with reference to one piece of the preceding indication information, but in other embodiments, reference may be made to other information.

With MPEG Media Transport (MMT) protocol as an example, indication information based on video content and spatial position thereof is reasonably added. number_of_projection_type, projection_type, number_of_content_type, content_type, number_of_asset, number_of_region, number_of_primary_region, packing_type, region_packing, region_descriptor and quality_level form identification of a specific data type and transmission mechanism.

In one embodiment of the present invention, the following fields can be added as appropriate.
number_of_projection_type: indicates the number of projection types included in an available video resource.
projection_type: indicates the projection type of the video resource. The value and meaning of the projection type are shown in Table 1.

**Table 1 projection_type**

| Value | Description |
|---|---|
| 0 | unmapped projection |
| 1 | equirectangular projection |
| 2 | cube map projection |
| 3 | octahedral projection |
| 4 | icosahedral projection |
| 5-127 | Reserved |

number_of_content_type: indicates the number of video content types included in the video resource based on a specific projection type.
content_type: indicates the video content type of the video resource. The value and meaning of the video content type are shown in Table 2.

**Table 2 content_type**

| Value | Description |
|---|---|
| 0 | common video |
| 1 | region-divided and region-rearranged |
| 2 | partitioned video |
| 3-127 | Reserved |

number_of_asset: indicates the number of video resources of a specific video content type.
number_of_region: indicates the number of regions to be divided and rearranged for a specific video resource region.
number_of_primary_region: indicates the number of primary field of view regions included in a specific video resource.
packing_type: indicates the rearrangement mode of the specific region of the specific video resource. The value and meaning of the rearrangement mode are shown in Table 3.

**Table 3 packing_type**

| Value | Description |
|---|---|
| 0 | The rearrangement mode of the region is rectangular rearrangement. |
| 1 | The rearrangement mode of the region is polygonal rearrangement. |
| 2-127 | Reserved |

region_packing: describes rearrangement information of specific regions of a specific video resource.
region_descriptor: describes spatial region information of a specific video resource.
quality_level: indicates quality level of video content.

Based on the above information, with MMT protocol as an example, an organization structure for the information is given below. Specifically, the organization structure is shown in Tables 4, 5, 6 and 7.

**Table 4**

| Syntax | Value | Number of Bits |
|---|---|---|
| Media_indication_message(){ | | |
| *message_id* | | 16 |
| *version* | | 8 |
| *length* | | 32 |
| extension { | N1 | 8 |
| *number_of_projection_type* | | |
| for (i=0; i<N1; i++){ | | 8 |
| *projection_type* | N2 | 8 |
| *number*_*of_content_type* | | |
| for (j=0; j<N2; j++) { | | 8 |
| *content_type* | | 8 |
| *table_id* | | 8 |
| *table_version* | | 16 |
| *table_length* | | |
| } | | |
| } | | |
| | | |
| } | | |
| *message_payload* { | | |
| for (i=0; i<N1^{∗}N2; i++){*table()* | | |
| } | | |
| } | | |
| } | | |

**Table 5**

| Syntax | Value | Number of Bits | Remark |
|---|---|---|---|
| Media_type0_table () { | | | |
| *table_id* | | 8 | uimsbf |
| *version* | | 8 | |
| *length* | | 16 | uimsbf |
| *reserved* | '1111' | 4 | |
| *number_of_asset* | N1 | 16 | uimsbf |
| *for (i*=*0; i<Nl; i*++*)*{ | | | |
| *asset_id()* | | | bslbf |
| *quality_level* | | 8 | uimsbf |
| } | | | |
| } | | | |
| | | | uimsbf |

**Table 6**

| Syntax | Value | Number of Bits | Remark |
|---|---|---|---|
| Media_type1_table () { | | | |
| t*able_id* | | 8 | uimsbf |
| *version* | | 8 | |
| *length* | | 16 | uimsbf |
| *reserved* | '1111' | 4 | |
| *number_of_asset* | N1 | 16 | uimsbf |
| *for (i*=*0; i*<*N1; i*++*)*{ | | | |
| *asset_id* | | | bslbf |
| *number_of_region* | N2 | 8 | uimsbf |
| *number_of_primary_region* | N3 | 8 | |
| *for (j*=*0;j<N3; j*++*)* { | | 8 | uimsbf |
| *packing_type[j]* | | | |
| *region_packing()* | | | |
| *region_descriptor()* | | 8 | |
| *quality_level* | | | uimsbf |
| } | | | |
| for (j=0; j<(N2-N3); | | 8 | |
| j++){ | | | |
| *packing_type[j]* | | 8 | uimsbf |
| *region_packing()* | | | |
| *region_descriptor()* | | | uimsbf |
| *quality_level* | | | |
| } | | | uimsbf |
| } | | | |
| } | | | |

**Table 7**

| Syntax | Value | Number of Bits | Remark |
|---|---|---|---|
| Media_type2_table () { | | | |
| *table_id* | | 8 | uimsbf |
| *version* | | 8 | uimsbf |
| *length* | | 16 | uimsbf |
| *reserved* | '1111' | 4 | bslbf |
| *numer*_*of_asset* | N1 | 16 | uimsbf |
| for (i=0; i<N1; i++){ | | | |
| *asset_id()* | | | |
| *region_descriptor()* | | 8 | uimsbf |
| *quality_level* | | | |
| } | | | |
| } | | | |

The meaning of each of the above fields has been explained above.

It is to be noted that in this embodiment, the indication information in this application is described by using the above fields as an example, and is not limited to the above fields and the sizes thereof. For a better understanding of the meanings of the above fields, reference may be made to the structure diagram shown in FIG. 6.

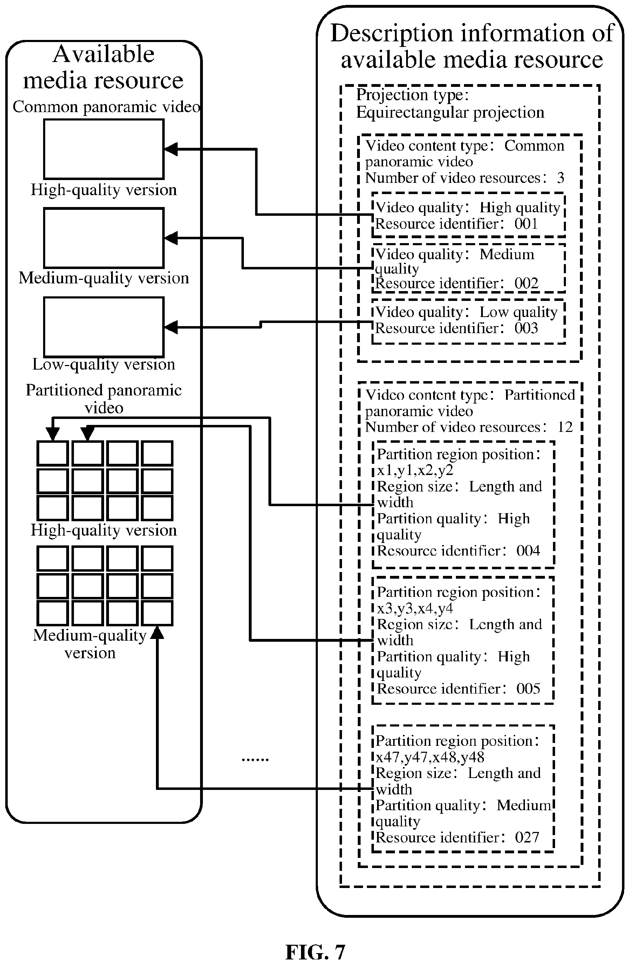

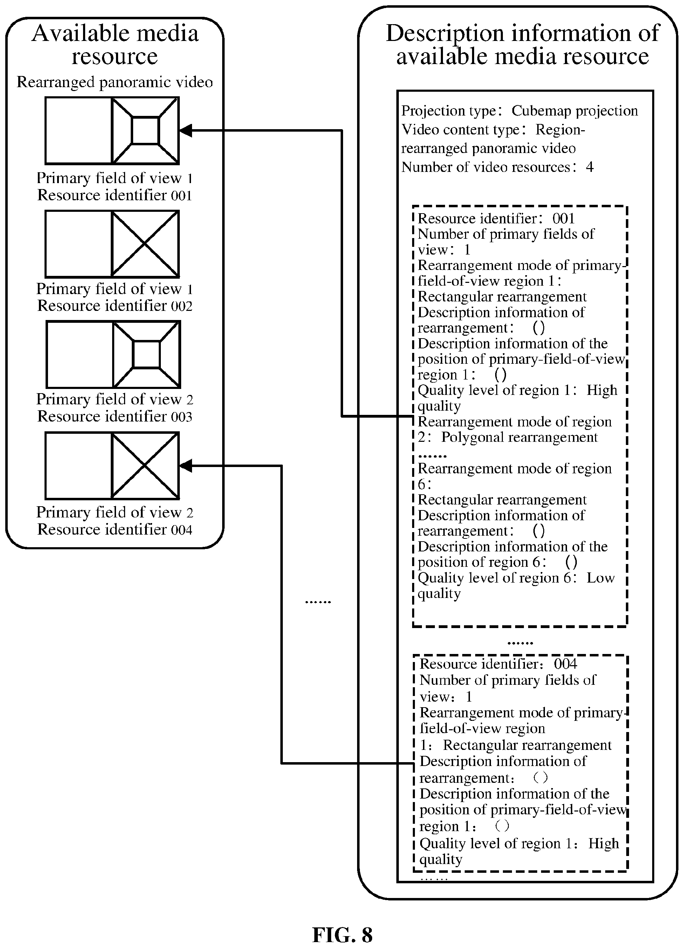

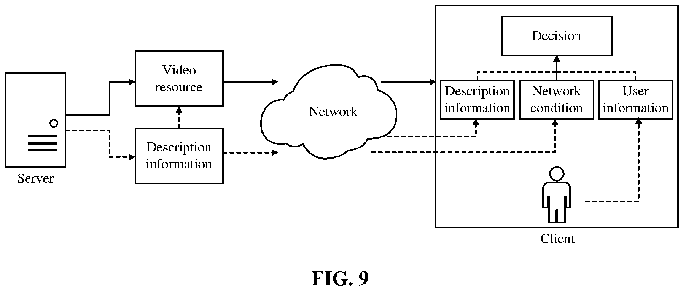

The following specific application example is illustrated as follows. To more clearly illustrate the method for identifying information about an available resource based on the field-of-view type of the video content, the video preprocessing manner, and the corresponding attributes, which is proposed herein, FIG. 7 is an example diagram illustrating identification in interactive panoramic video consumption in one embodiment of the present invention. FIG. 8 is an example diagram illustrating identification in interactive panoramic video consumption in another embodiment of the present invention. FIG. 9 is a schematic diagram illustrating an application example of interactive panoramic video consumption in one embodiment of the present invention. Application example: interactive panoramic video consumption

In the application of a panoramic video, the data volume required to be sent is huge. The panoramic video includes a 360-degree view angle range, so a user cannot consume the content of the whole panoramic video at one time due to the limitation of human eyes. The user consumes a part of the content of the panoramic video at one time. Therefore, the user needs to determine, according to the network condition and the user viewpoint position, the to-be-acquired video resource in the video resource identified by the signaling message. The signaling information provided herein can indicate all available video resources and can be used to accurately locate video resources that meet the requirements of the user.

For example, as shown in FIG. 7 and FIG. 8, according to the projection type, video content type, video preprocessing method, description of video region position, and identification of video quality level of all available resources, the user screens out one or more media resource identifiers from the video content attribute according to the current network state and the region of interest, and indexes to the corresponding video resource through the media resource identifier to perform selective reception or active acquisition. For example, as shown in FIG. 7, the user is watching the video content in the top region. According to the network condition, the client decision presentation policy is: presenting a partition high-quality panoramic video within a top region 90-degree view angle range and a uniform low-quality panoramic video, screening a video resource with a projection_type of 1 from available video resources, screening out a uniform-quality video Media_type0_table and a non-uniform video type Media_type2_table including a primary field of view from video resources with a equirectangular projection type, directly screening, based on respective video content view field types, low quality from quality level information quality_level, without distinguishing video content preprocessing methods in the Media_type0_table, and obtaining a Media resource identifier 003 from a screened-out result; the video content preprocessing method is not distinguished in the Media_type2_table, and the partition region position to be directly screened is 90 degrees of the top region range, a plurality of partitions are screened out to form a 90-degree range, high quality is further screened from the quality level information quality_level of each partition, media resource identifiers 004, 005, 006 and 007 are obtained from the screened-out result. Corresponding video resources are indexed through the obtained media resource identifiers, and a user can selectively receive or actively obtain the corresponding video resources, so that the video data obtained by the user can accurately accord with the client decision presentation policy. The optimal video consumption experience of the user is guaranteed under the current bandwidth limitation.

In this embodiment, MMT protocol is used as an example to clarify the proposed schemes, but these schemes can also be used in other transmission systems and protocols, and will not be described again.

This embodiment provides a method for describing an available video resource based on video content attributes in a signaling message. Different video content types, preprocessing methods of different types of video contents, and corresponding attributes of common videos, 360-degree panoramic videos and ultrahigh-resolution videos are identified. By means of the projection type, the identification of the video content type and the identification of the preprocessing method, the description information of the available video resource can indicate all available video content types, including common videos, ultrahigh-resolution videos, 360-degree panoramic videos , as well as various and specific video content types related to each type. Each video resource can be accurately and unambiguously located through the description method provided by the present invention. The problem in which the existing signaling message cannot cover all video content types and cannot distinguish and accurately position different types of video contents is avoided.

In the method for describing the available video resources in this embodiment, different video content types of common videos, 360-degree panoramic videos and ultrahigh-resolution videos, video preprocessing methods based on the video content types, and corresponding specific attributes, even in the presence of more brand-new video content types or specific attributes resulted from brand-new video content making and processing methods, can still be indicated through the description method for describing the available video resources herein. Therefore, it is only needed to add one or more types and add corresponding preprocessing methods and specific parameters to the specific projection type or video content type in the description method provided herein, without changing the method for describing the available video resources herein and without changing the description of other video resources.

One embodiment of the present invention further provides a computer-readable storage medium. The computer-readable storage medium stores one or more programs which, when executed by one or more processors, cause the one or more processors to perform the method for processing a video resource in the above-mentioned embodiments. The method includes: identifying the video type of the video resource to obtain description information of the video resource, where the description information includes at least one of the following corresponding to the video type: a video projection type, a video rearrangement mode, and video partitioning mode; and sending the description information to the receiving end of the video resource.

In one embodiment, the storage medium may include, but is not limited to, a USB flash disk, a read-only memory, ROM, a random access memory, RAM, a mobile hard disk, a magnetic disk, an optical disk or another medium capable of storing the program codes.

One embodiment of the present invention further provides a processor for executing one or more programs to perform the above-mentioned method for processing a video resource.

In one embodiment, the processor identifies the video type of the video resource according to the program codes stored in the storage medium to obtain the description information of the video resource. The description information includes at least one of the following corresponding to the video type: a video projection type, a video rearrangement mode and a video partitioning mode.

In one embodiment, the processor sends the description information to the receiving end of the video resource according to the program codes stored in the storage medium.

For specific examples in this embodiment, reference may be made to the content in the preceding embodiments, and the specific examples will not be repeated herein.

Each of modules or steps described above may be performed by a general-purpose computing device. They may be concentrated on a single computing device or distributed on a network formed by multiple computing devices. Optionally, they may be performed by program codes executable by the computing devices, so that they may be stored in a storage device and executable by the computing devices. In some circumstances, the illustrated or described steps may be executed in sequences different from those described herein, or they may be made into various integrated circuit modules, or each module or step therein may be made into a single integrated circuit module. In this way, the present application is not limited to any specific combination of hardware and software.

### INDUSTRIAL APPLICABILITY

The video type of the video resource is identified, and each video resource and each processing method can be accurately positioned. The phenomenon in which the video resource cannot be accurately positioned and identified in the related art is avoided.

## Claims

1. A method for processing a video resource, comprising:
identifying a video type of the video resource to obtain description information of the video resource, wherein the description information comprises at least one of the following corresponding to the video resource: a video projection type, a video rearrangement mode, and a video partitioning mode; and
sending the description information to a receiving end of the video resource.

2. The method of claim 1, after sending the description information to the receiving end of the video resource, the method further comprising:
sending the video resource to the receiving end; or
in response to determining that the video resource comprises a plurality of video resources, receiving a request message of the receiving end, screening the video resources according to the request message, and sending a screened-out video resource to the receiving end.

3. The method of claim 1, wherein the video type comprises a projection type, a video content type, video quality, and video region information.

4. The method of claim 3, wherein the projection type comprises at least one of equirectangular projection, cube map projection, octahedron projection, icosahedron projection, and no projection.

5. The method of claim 3, wherein the video content type comprises at least one of a non-region-divided video, a rearranged video, and a partitioned video.

6. The method of claim 3, wherein the video quality comprises at least one of a resolution, a code rate, a frame rate, and a quality level.

7. The method of claim 5, wherein a description type of the rearranged video comprises a rectangular rearrangement or a polygonal rearrangement.

8. The method of claim 5, wherein the partitioned video comprises at least one of: a number of partitions, a region position of each of the partitions, and video quality of the each of the partitions.

9. The method of claim 3, wherein a description type of the video region information comprises at least one of a coordinate of a center point of a region, a width of the region, and a height of the region.

10. The method of claim 9, wherein a coordinate system in which the coordinate is located comprises a two-dimensional spatial coordinate system or a three-dimensional spatial coordinate system, wherein
in the two-dimensional spatial coordinate system, a value of the coordinate comprises at least one of a value in a two-dimensional rectangular coordinate system and a value in a two-dimensional spherical coordinate system; and
in the three-dimensional spatial coordinate system, the value of the coordinate comprises at least one of a value in a three-dimensional spatial rectangular coordinate system and a value in a three-dimensional spherical coordinate system.

11. A method for processing a video resource, comprising:
receiving description information of the video resource, wherein the description information is used for indicating a video type of the video resource, and the description information comprises at least one of the following corresponding to the video resource: a video projection type, a video rearrangement mode, and a video partitioning mode; and
processing the video resource according to the description information.

12. The method of claim 11, after receiving the description information of the video resource, the method further comprising:
requesting the video resource according to the description information and at least one of network quality of a receiving end and capability information of the receiving end.

13. The method of claim 11, wherein processing the video resource according to the description information comprises:
receiving the video resource; or
receiving part of the video resource; or
rejecting receiving the video resource.

14. The method of claim 11, the video type comprises a projection type, a video content type, video quality, and video region information.

15. An apparatus for processing a video resource, comprising:
a processing module, which is configured to identify a video type of the video resource to obtain description information of the video resource, wherein the description information comprises at least one of the following corresponding to the video resource: a video projection type, a video rearrangement mode, and a video partitioning mode; and
a sending module, which is configured to send the description information to a receiving end of the video resource.

16. An apparatus for processing a video resource, comprising:
a receiving module, which is configured to receive description information of the video resource, wherein the description information is used for indicating a video type of the video resource, and the description information comprises at least one of the following corresponding to the video resource: a video projection type, a video rearrangement mode, and a video partitioning mode; and
a processing module, which is configured to process the video resource according to the description information.

17. A computer-readable storage medium storing one or more programs which, when executed by one or more processors, cause the one or more processors to perform the method of any one of claims 1 to 14.

18. A processor, which is configured to execute one or more programs to perform the method of any one of claims 1 to 14.
